# EUROPEAN PATENT APPLICATION

(11) **EP 2 439 938 A1**
(43) Date of publication of application: **11.04.2012**
(21) Application number: 09845963.9
(22) Date of filing: 19.06.2009
(51) Int. Cl.: H04N 5/45

(54) **METHOD FOR VIEWING TELEVISION CHANNELS AND TV SET**

(71) Applicant: Shenzhen TCL New Technology Co., LTD, Nanshan District Shenzhen Guangdong 518067 (CN)
(72) Inventor: HUANG, Yaru, Shenzhen Guangdong 518067 (CN); FU, Yaoyuan, Shenzhen Guangdong 518067 (CN); WANG, Hua, Shenzhen Guangdong 518067 (CN); ZUO, Bo, Shenzhen Guangdong 518067 (CN)
(74) Representative: Manitz, Finsterwald & Partner GbR
(86) International application number: PCT/CN2009/000673
(87) International publication number: WO 2010/145049

(57) **Abstract**

A channel browsing method of a television includes the following steps: receiving a channel browsing control command, receiving a first television signal of a current channel being played via a main tuner, outputting frequency data of at least one browsing channel needed to be browsed to a vice tuner, receiving at least one second television signal corresponding to the at least one browsing channel via the vice tuner; and processing the first television signal and the at least one second television signal, defining a vice window for playing at least one program of the at least one browsing channel and a main window for playing the program of the current channel. With the channel browsing method of the present invention, users can browse the program of each channel when watching the program of the current channel.

## Description

### BACKGROUND

### 1. Technical Field

The present invention relates to television technologies, and particularly, to a television and a channel browsing method thereof.

### 2. Description of Related Art

With the development of the television technology and particularly prevailing use of digital televisions, the television now has become a multi-functional multimedia. In the preset stage, analog televisions are being replaced by the digital televisions which have a number of channels and a number of programs played on the channels respectively, which can bring much enjoyableness and video information to users.

However, on the other hand, with the large number of programs and channels, it is complicated to operate the television especially to switch channels for the user. For example, users often need to switch the channels one by one to select the favorite program, which is inconvenient and time-wasting. For example, to a television having a hundred channels in the channel list, users may need to switch the channels ninety-nine times before reaching to the channel playing the favorite program.

Therefore, there is room for improvement.

### SUMMARY

The present invention provides a channel browsing method of a television. The channel browsing method includes the following steps:
in a first step, receiving a channel browsing control command, receiving a first television signal of a current channel being played via a main tuner, outputting frequency data of at least one browsing channel needed to be browsed to a vice tuner, and receiving at least one second television signal corresponding to the at least one browsing channel via the vice tuner;
in a second step, processing the first television signal and the at least one second television signal respectively, defining a vice window for playing at least one program of the at least one browsing channel and a main window for playing the program of the current channel.

Preferably, the browsing channel control command is inputted by pushing a channel up and down button on a controller of the television, and the at least one browsing channel comprises a preceding channel before the current channel or a subsequent channel after the current channel, or the browsing channel control command is inputted by pushing at least one number key on a controller of the television corresponding to the at least one browsing channel respectively.

Preferably, the browsing channel control command is inputted by keeping pushing a channel up and down button on a controller of the television for a predetermined time period, and the at least one browsing channel comprises at least two preceding channels before the current channel or at least two subsequent channels after the current channel.

Preferably, the first step comprises receiving the first television signal of the current channel by the main tuner, sequentially outputting the frequency data of at least two browsing channels to the vice tuner, and sequentially receiving the second television signals of the at least two browsing channels via the vice tuner; the second step comprises processing the first television signal and the second television signals, defining the vice window for playing the programs of the at least two browsing channels sequentially, and defining the main window for playing the program of the current channel.

Preferably, the second step comprises:
extracting program information of the at least one browsing channel from an electronic program guide and displaying the program information in a display when the at least one program is being played.

The present invention further provides a television. The television includes a main tuner for receiving a first television signal of a current channel; a micro control unit for extracting frequency data of at least one browsing channel from a storage device in response to a browsing channel control command, outputting the frequency data of the at least one browsing channel to a vice tuner, and controlling the vice tuner to receive at least one second television signal of the at least one browsing channel; a vice tuner for receiving the frequency data of the at least one browsing channel received by the micro control unit and receiving the second television signal of the at least one browsing channel; a display; and a displaying processing module for defining a vice window for playing at least one program of the at least one browsing channel and defining a main window for playing the program of current channel.

Preferably, the browsing channel control command is inputted by pushing a channel up and down button on a controller of the television, and the at least one browsing channel is a preceding channel before the current channel or a subsequent channel after the current channel, or the browsing channel control command is inputted by pushing at least one number key on a controller of the television corresponding to the at least one browsing channel.

Preferably, the micro control unit is further used for receiving a channel switching command, and outputting the frequency data of the at least one browsing channel to the main tuner in response to the channel switching command.

Preferably, the micro control unit is further used for receiving program information of the at least one browsing channel from an electronic program guide, and the displaying processing module is further used for controlling the program information of the browsing channel to be displayed in the display.

Preferably, the television further comprises an on-screen display module for receiving the program information of the at least one browsing channel received by the micro control unit, generating an on-screen display menu corresponding to the program information, and further outputting the on-screen display menu to the displaying processing module.

With the present invention, the frequency data of the at least one browsing channel can be inputted into the vice tuner of the television to allow the program of the at least one browsing channel to be played in the vice window. Additionally, the program information of the at least one browsing channel can also be displayed in the display. Meanwhile, the program of the current channel is played in the main window, which allows the users to browse other channels and obtain the program information of other channels when watching the program of the current channel.

### DISCRIPTION OF THE DRAWINGS

Many aspects of the embodiments can be better understood with reference to the following drawings. The components in the drawings are not necessarily dawns to scale, the emphasis instead being placed upon clearly illustrating the principles of the embodiments. Moreover, in the drawings, like reference numerals designate corresponding parts throughout the several views.
FIG 1 is a block diagram of a television in accordance with an embodiment of the present invention.
FIG 2 is a flow chart of a channel browsing method of the television of FIG. 1.

### DETAILED DESCRIPTION

The disclosure is illustrated by way of example and not by way of limitation in the figures of the accompanying drawings in which like references indicate similar elements. It should be noted that references to "an" or "one" embodiment is this disclosure are not necessarily to the same embodiment, and such references mean at least one.

In an embodiment of the present invention, the frequency data of at least one browsing channel can be inputted into a vice tuner of a television to allow programs of the at least one browsing channel to be played in a vice window. Additionally, program information of the at least one browsing channel can also be displayed in the display. Meanwhile, the program of the current channel is played in a main window, which allows the users to browse other channels and obtain the program information of other channels when watching the program of the current channel.

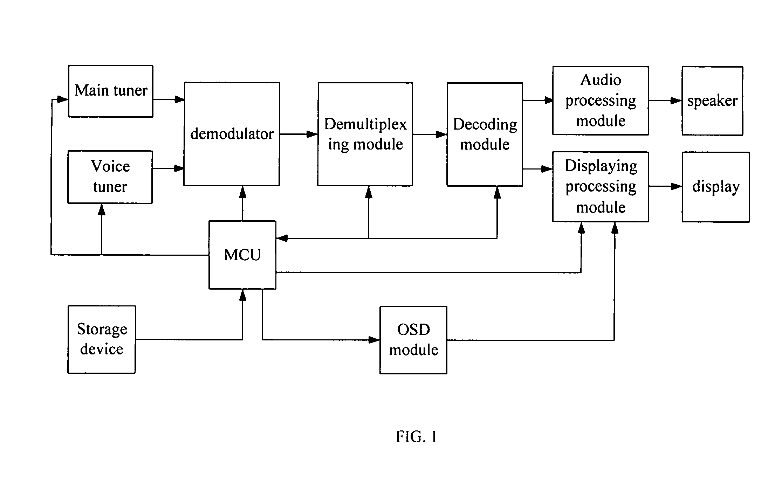

Referring to FIG. 1, a digital television includes a main tuner, a vice tuner, a demodulator, a demultiplexing module, a decoder, a micro control unit (MCU), a storage device, an on-screen display (OSD) module, a displaying processing module, an audio processing module, a speaker, and a display.

The main tuner is electrically connected to the MCU and the demodulator for receiving frequency data of a current channel from the MCU and a first television signal of the current channel.

The vice tuner is electrically connected to the MCU and the demodulator for receiving the frequency data of any other channel (browsing channel) in the channel list except the current channel and a second television signal of the browsing channel.

The demodulator is electrically connected to the MCU and the demultiplexing module for demodulating the first and second television signals received by the main tuner and the vice tuner, and for demodulating transport streams corresponding to the current channel and the browsing channel respectively from a high frequency carrier carrying the first and second television signals.

The demultiplexing module is electrically connected to the MCU and the decoder for separate data packages of different programs from the transport streams.

The decoder is electrically connected to the audio processing module and the displaying processing module for decoding the first and second television signals of the current channel and the browsing channel.

The MCU is connected to the storage device and the displaying processing module for controlling the operation of the television. For example, the MCU is capable of reading a corresponding frequency data from the storage device in response to a controlling command and outputting the frequency data to the main tuner to control the main tuner to receive the first television signal of the current channel. Also, the MCU is capable of reading a frequency data from the storage device in response to a browsing channel control command, and outputting the frequency data to the vice tuner to control the vice tuner to receive the second television signal of the browsing channel. Further, the MCU is capable of extracting program information of a program played on a channel being browsed from an electronic program guide (EPG), and outputting the program information to the OSD module to control the OSD module to generate an OSD menu which displays the program information. Additionally, the MCU is capable of controlling the displaying processing module to define a main window for playing the program of the current channel and a vice window for playing the program of the browsing channel.

The storage device is used for storing the frequency data of the current channel and the browsing channel.

The OSD module is connected to the displaying processing module for generating the OSD menu corresponding to the program information of the current browsing channel and outputting the OSD menu to the displaying processing module.

The displaying processing module is connected to the display for defining a the main window and the vice window for respectively playing the programs of the current and browsing channels, and further for generating the OSD menu of the program information of the current browsing channel under the control of the MCU and the OSD module.

The display is used for displaying the main window, the vice window, and the OSD menu.

The audio processing module and the speaker work as the audio processing module and the speaker of a conventional television.

In operation, users can watch the program played on a channel (the current channel). When users want to browse the programs in other channels, the users can input the browsing channel control command via a controller of the television. In the embodiment, the browsing channel control command includes a first control command allowing the browsing of a single channel and a second control command allowing the browsing of a number of channels. Users can push the channel up and down button and release the button immediately to input the first control command, and can keep pushing the channel up and down button for a predetermined time period such as two seconds to input the second control command.

After the first control command is received, the MCU reads the frequency data of a subsequent channel after the current channel from the storage device, and outputs the frequency data to the vice tuner to control the vice tuner to receive the television signal corresponding to the subsequent channel. The television signal is outputted to the displaying processing module after being modulated, demultiplexed, and decoded. In response to the television signal, the displaying processing module defines the vice window for playing the program of the subsequent channel, and defines the main window playing the program of the current channel simultaneously. Meanwhile, the MCU extracts the program information of the program played on the subsequent channel such as a name of the program and a starting ending time of the program from the EPG, and further outputs the program information to the OSD module to allow the OSD module to generate the OSD menu of the program information of the subsequent channel. Thus, the OSD menu can be displayed in the display.

The time duration in which the program and the program information of the subsequent channel are displayed in the display can be preset to be three seconds in some embodiments. In the time duration, users can switch channels. Users can push a confirm button on the controller to input a channel switching command. When receiving the channel switching command, the MCU outputs the frequency data of the subsequent channel to the main tuner. The main tuner receives the frequency data of the subsequent channel. Accordingly, the television switches from the current channel to the subsequent channel to allow the subsequent channel to work in a play mode. At this time, the vice tuner no longer works and the vice window disappears from the display to finish the channel switching operation. If users do not push the confirm button in the time duration, the vice tuner can also stop working to allow the vice window to disappear from the display. In this state, the current channel is not switched.

If the users want to browse the program of a target browsing channel, users can push the number key corresponding to the target browsing channel on the controller. The MCU thus reads the frequency data of the target browsing channel from the storage device directly to allow the program of the target browsing channel to be played in the vice window.

When the second control command is received, the MCU reads the frequency data of the subsequent channel from the storage device and further outputs the frequency data to the vice tuner. The vice tuner thus receives the television signal of the subsequent channel. The television signal is outputted to the displaying processing module after being demodulated, demultiplexed, and decoded. Therefore, the displaying processing module defines the vice window playing the program of the subsequent channel and the main window playing the program of the current channel. Meanwhile, the MCU extracts the program information of the subsequent channel such as the name of the program and the starting and ending time of the program from the EPG, and outputs the program information to the OSD module to allow the OSD module to generate the OSD menu of the program information of the subsequent channel. Thus, the OSD menu can be displayed in the display.

The time duration in which the program and the program information of the subsequent channel are displayed in the display can be preset to be three seconds in some embodiments. In the preset time duration, the users can push a confirm button on the controller to input a channel switching command. When receiving the channel switching command, the MCU outputs the frequency data of the subsequent channel to the main tuner. The main tuner receives the frequency data of the subsequent channel. Accordingly, the television switches from the current channel to the subsequent channel to allow the subsequent channel to work in the play mode. At this time, the vice tuner no longer works and the vice window disappears from the display to finish the channel switching operation. If the users do not push the confirm button in the time duration, the vice tuner can also stop working to allow the vice window to disappear from the display. In this state, the current channel is not switched.

If the users do not push the confirm button in the time duration, the MCU outputs the frequency data of a next channel after the subsequent channel to the vice tuner. The television signal is received by the vice tuner and outputted to the displaying processing module after being demodulated, demultiplexed, and decoded. Thus, the displaying processing module defines the vice window playing the program of the next channel and defines the main window playing the program of the current channel.

Simultaneously, the MCU extracts the program information of the next channel from the EPG such as the time of the program and the starting and ending time of the program and further outputs the program information to the OSD module. The OSD module thus generates the OSD menu of the program information of the next channel to allow the OSD menu to be displayed in the display. In this way, the MCU can sequentially output the frequency data of each channel into the vice tuner in a predetermined periodical to allow the program of each channel to be sequentially played in the vice window until the confirm button is pushed.

In the present invention, when users keep pushing the channel and down button in the time duration, the MCU sequentially reads the frequency data of each channel and sequentially outputs the frequency data to the vice tuner. The frequency data is sequentially received by the vice tuner and outputted to the displaying processing module after being demodulate, demultiplexed, and decoded. The displaying process module thus can sequentially define the vice window playing the program of each channel and define the main window playing the program of the current channel. Meanwhile, the MCU also extracts the program information of each channel from the EPG such as the name of the program and the staring and ending time of the program and then outputs the program information. The OSD module receives the OSD menu to generate the OSD menu. The time period in which the program, the program information of each channel, and the OSD menu are displayed in the display can be set by the manufacturer and can be adjusted by the users. During the process, the users can push the confirm button to switch from the current channel to a desired channel.

In some embodiments, the main window and the vice window can be displayed in a "picture in picture" way. In other embodiments, the main window and the vice window can be displayed in other ways.

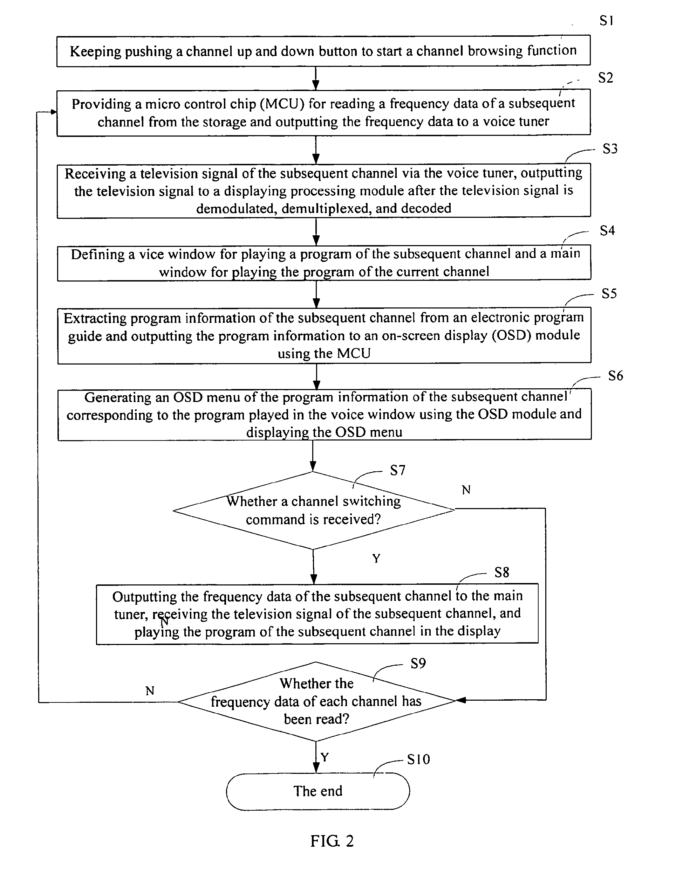

Referring to FIG 2, a channel browsing method is provided to allow users to browse the program of each channel. The channel browsing method includes the following steps:
In step S1, keeping pushing a channel up and down button to start the channel browsing process;
In step S2, providing a MCU for reading frequency data of a subsequent channel from a storage device and outputting the frequency data to a vice tuner.
In step S3, receiving the television signal of the subsequent channel via the vice tuner, outputting a television signal of the subsequent channel to a displaying processing module after the television signal is demodulated, demultiplexed, and decoded.
In step S4, defining a vice window for playing the program of the subsequent channel and a main window for playing the program of a current channel.
In step S5, extracting program information of the subsequent channel from an electronic program guide and outputting the program information to an on-screen display (OSD) module using the MCU.
In step S6, generating an OSD menu of the program information of the subsequent channel corresponding to the program played in the vice window using the OSD module and displaying the OSD menu in the display;
In step S7, determining whether a switching channel command is received. If yes, goes to step S8, otherwise, goes to step S9.
In step S8, outputting the frequency data of the subsequent channel to the main tuner, receiving the television signal of the subsequent channel, and playing the program of the subsequent channel in the display.
In step S9, determining whether the frequency data of each channel have been read? If yes, goes to step S10, otherwise, returns to step S2.
In step S10, the end.

Even though information and the advantages of the present embodiments have been set forth in the foregoing description, together with details of the mechanisms and functions of the present embodiments, the disclosure is illustrative only; and that changes may be made in detail, especially in matters of shape, size, and arrangement of parts within the principles of the present embodiments to the full extend indicated by the broad general meaning of the terms in which the appended claims are expressed.

## Claims

1. A channel browsing method of a television comprising the following steps:
in a first step, receiving a channel browsing control command, receiving a first television signal of a current channel being played via a main tuner; outputting frequency data of at least one browsing channel needed to be browsed to a vice tuner, receiving at least one second television signal of at least one browsing channel via the vice tuner; and
in a second step, processing the first television signal and the at least one second television signal, defining a vice window for playing at least one program of the at least one browsing channel sequentially and a main window for playing the program of the current channel.

2. The channel browsing method as claimed in claim 1, wherein the browsing channel control command is inputted by pushing a channel up and down button on a controller of the television, and the at least one browsing channel comprises a preceding channel before the current channel or a subsequent channel after the current channel, or the browsing channel control command is inputted by pushing at least one number key on a controller of the television corresponding to the at least one browsing channel respectively.

3. The channel browsing method as claimed in claim 1, wherein the browsing channel control command is inputted by keeping pushing a channel up and down button on a controller of the television for a predetermined time period, and the at least one browsing channel comprises at least two preceding channels before the current channel or at least two subsequent channels after the current channel.

4. The channel browsing method as claimed in claim 3, wherein the first step comprises receiving the first television signal of the current channel by the main tuner, sequentially outputting the frequency data of at least two browsing channels to the vice tuner, and sequentially receiving the second television signals of the at least two browsing channels via the vice tuner; the second step comprises processing the first television signal and the second television signals, defining the vice window for playing the programs of the at least two browsing channels sequentially, and defining the main window for playing the program of the current channel.

5. The channel browsing method as claimed in claim 1, wherein the second step comprises:
extracting program information of the at least one browsing channel from an electronic program guide and displaying the program information in a display when the at least one program is being played.

6. A television, comprising:
a main tuner for receiving a first television signal of a current channel;
a vice tuner for receiving a frequency data of at least one browsing channel and at least one second television signal of the at least one browsing channel;
a storage device;
a micro control unit for extracting frequency data of the at least one browsing channel from the storage device in response to a browsing channel control command, outputting the frequency data of the at least one browsing channel to the vice tuner, and controlling the vice tuner to receive the at least one second television signal of the at least one browsing channel;
a display; and
a displaying processing module for defining a vice window for playing at least one program of the at least one browsing channel and a main window for playing the program of the current channel.

7. The television as claimed in claim 6, wherein the browsing channel control command is inputted by pushing a channel up and down button on a controller of the television, and the at least one browsing channel is a preceding channel before the current channel or a subsequent channel after the current channel, or the browsing channel control command is inputted by pushing at least one number key on a controller of the television corresponding to the at least one browsing channel.

8. The television as claimed in claim 6, wherein the micro control unit is further used for receiving a channel switching command, and outputting the frequency data of the at least one browsing channel to the main tuner in response to the channel switching command.

9. The television as claimed in claim 6, wherein the micro control unit is further used for receiving program information of the at least one browsing channel from an electronic program guide, and the displaying processing module is further used for controlling the program information of the browsing channel to be displayed in the display.

10. The television as claimed in claim 9, wherein the television further comprises an on-screen display module for receiving the program information of the at least one browsing channel received by the micro control unit, generating an on-screen display menu corresponding to the program information, and further outputting the on-screen display menu to the displaying processing module.
